# EUROPEAN PATENT APPLICATION

(11) **EP 4 304 029 A1**
(43) Date of publication of application: **10.01.2024**
(21) Application number: 22183692.7
(22) Date of filing: 07.07.2022
(51) Int. Cl.: H02G 3/00, H02B 13/00, H02G 15/18, F16B 31/00, F16B 35/00, B25B 29/02, H01R 13/207, H01R 13/443, H01R 13/53, H01R 11/28, H01R 101/00, F16B 21/02, F16B 37/12, H01R 13/622

(54) **INSULATION PLUG AND INSATLLING PROCESS THEREOF**

(71) Applicant: 3M Innovative Properties Company, Saint Paul, MN 55133-3427 (US)
(72) Inventor: Gravermann, Mark, 41453 Neuss (DE); Stollwerck, Dr. Gunther, 41453 Neuss (DE); Milek, Martin Andreas, 41453 Neuss (DE); Reeken, Rainer, 41453 Neuss (DE); Bund, Christine Brigitte, 41453 Neuss (DE); Gunjaca, Mirco, 41453 Neuss (DE); Wilson, Christopher R., Austin, TX 78729 (US); Pesch, Marc Christian, 41453 Neuss (DE)
(74) Representative: Müller, Bruno

(57) **Abstract**

Insulation plug (1) for being inserted into a rear cavity (70) of a medium-voltage or high-voltage separable connector (10) for connecting a power cable to a bushing (40) in a power distribution network. In use, the insulation plug insulates a threaded connection stud (90) for attaching the separable connector (10) to the bushing (40).

The insulation plug (1) comprises
a) a plug body (140)
b) a thread block (170), affixed in the plug body (140), and comprising an internal plug thread (180) for securing the insulation plug (1) in the rear cavity (70);
c) a tubular sleeve (200) comprising i) a radially outer surface comprising an outer sleeve thread (210); ii) a radially inner surface comprising an inner sleeve thread (220).

The inner sleeve thread (220) is adapted to threadedly engage with the connection stud (90). The outer sleeve thread (210) is threadedly engaged with the plug thread (180), and a portion (230) of the inner sleeve thread (220) protrudes axially from the plug thread (180), such that upon insertion the protruding portion (230) can threadedly engage the connection stud (90).

## Description

This disclosure relates to insulation plugs for separable connectors in medium voltage and high-voltage power distribution networks. The disclosure also relates to kits of parts from which such insulation plugs can be assembled, to separable connectors having such insulation plugs installed therein, to networks including such separable connectors, and to processes for installing such insulation plugs.

In a medium-voltage or high-voltage power distribution network, a power cable is typically connected to network apparatus, such as switchgears or transformers, by a separable connector (also often referred to as a removable power connector, elbow connector or T-body connector) mounted at the end of the cable. Such separable connectors have a front cavity to receive a protruding portion of a bushing of the apparatus, and a cable lug on high or medium voltage. The cable lug is in electrical contact with the cable conductor and can be mechanically and electrically connected to the bushing, e.g., via a threaded connection stud accessible through an opposed rear cavity of the separable connector, so that power can flow from the power cable through the cable lug, the connection stud and the bushing into the network apparatus. When the separable connector is in use, the cable lug and the connection stud are on the elevated voltage of the power conductor of the cable. After connecting the cable lug to the bushing, the rear cavity is filled by inserting an insulation plug, which insulates the cable lug and the connection stud.

Some traditional separable connectors are described in the European patent application EP 0 691 721 A1. Examples of traditional separable connectors are the 3M^{™} 600 10 Amp T-Bodies 5815 Series from 3M Co., St. Paul, Minnesota, U.S.A., or the "(M) (P) 480 TB separable tee shape connector" of Nexans Network Solutions N.V., Erembodegem, Belgium.

For securing the insulation plug in the rear cavity the insulation plug has an internal plug thread that can engage with the threaded connection stud. The rear cavity is typically formed by a flexible material and is supposed to fit tightly around the insulation plug to prevent ingress of water and dust and to avoid air pockets. To secure the insulation plug in the rear cavity, the plug is first forced, against the elastic forces of the cavity wall, into the rear cavity, far enough for its internal plug thread to engage with the threaded connection stud. By then turning the insulation plug, the plug thread engages the threaded connection stud. Turning further advances the plug deeper into the rear cavity until it has reached a final position.

The threaded connection stud is also used to connect the separable connector to a bushing. One end of the connection stud is threaded into the bushing conductor such that a flange of the connection stud presses a cable lug of the connector against the bushing conductor. The opposed end of the stud protrudes into the rear cavity so that the internal plug thread of the insulation plug can engage with it to secure the plug in the rear cavity.

A difficulty with securing an insulation plug in a rear cavity has often been that pushing the plug far enough into the rear cavity required strong manual force, because the tight-fitting wall of the cavity had to be expanded for the plug to be pushed in deep enough to engage the connection stud. While pushing the plug hard deep into the rear cavity, the installer had to position and orient the plug thread - without seeing it - such that it was ready to engage with the stud, then the plug had to be turned by about a full turn to engage the plug thread with the thread of the stud. Where alignment between these threads was not perfect, turning the plug - while pushing it hard into the cavity - could result in the plug thread of the plug or the thread of the stud being damaged, making engagement impossible.

Since strong manual forces were applied to push the plug deep enough into the rear cavity, a misalignment between the two threads often resulted in the plug thread being damaged so badly that the insulation plug was not useable anymore and had to be replaced.

The present disclosure attempts to address this problem. It provides, in a first fundamental aspect, an insulation plug for being inserted into a rear cavity of a medium-voltage or high-voltage separable connector for connecting a power cable to a bushing in a power distribution network of a national grid, and operable to insulate a threaded connection stud on medium or high voltage for attaching the separable connector to the bushing, the insulation plug comprising
a) a plug body formed by a solidified insulating material and comprising a high-voltage end portion, in use arranged in the rear cavity, and an opposed low-voltage end portion, in use protruding from the rear cavity;
b) a thread block, affixed in the high-voltage end portion of the plug body, and comprising an internal plug thread for securing the insulation plug in the rear cavity via a mechanical connection to the connection stud, wherein a symmetry axis of the plug thread defines axial directions;
c) a tubular sleeve comprising i) a radially outer surface comprising an outer sleeve thread and ii) a radially inner surface comprising an inner sleeve thread; the inner sleeve thread being adapted to threadedly engage with the connection stud; wherein at least an axial portion of the outer sleeve thread is threadedly engaged with the plug thread, and wherein a portion of the inner sleeve thread protrudes axially from the plug thread, such that upon insertion the protruding portion can threadedly engage the connection stud.

In an insulation plug according to the present disclosure the tubular sleeve is engaged in the plug thread and the inner sleeve thread protrudes from the plug thread towards the connection stud (upon insertion). Because the inner sleeve thread protrudes, it "extends" the plug thread by the length of the protruding portion. The sleeve can therefore engage the threaded stud even before the insulation plug has been pushed deep into the rear cavity. Where a traditional insulation plug had to be forced into the rear cavity almost down to its final position for its thread to engage, the insulation plug of the present disclosure has the protruding sleeve which allows engagement between the threads at a lower insertion depth. Since the plug needs to be inserted less deep to achieve engagement, less mechanical force is required, which makes it easier for a human installer to position and orient the plug thread and the tubular sleeve relative to the thread of the connection stud.

Less force, easier positioning and easier orientation reduce the risk of one of the threads being damaged when performing the initial engagement between plug thread and stud thread.

After initial engagement, the insulation plug is brought to its final insertion depth by turning it further. As the plug is turned further, the tubular sleeve within the plug thread advances further on the stud thread, whereby the insulation plug advances deeper into the rear cavity. When turning the insulation plug further, the sleeve turns within the plug thread and advances towards the low-voltage end portion (as defined below) of the plug body, thereby reducing the distance by which the sleeve protrudes from the internal thread. When the insulation plug is in its final insertion position, the sleeve may not protrude at all from the internal thread anymore.

The present disclosure relates to insulation plugs for use in medium voltage or high-voltage power distribution networks in which electrical power is distributed over large geographic areas via HV/MV power cables, transformers, switchgears, substations etc. with currents of tens or hundreds of amperes and voltages of tens of kilovolts. The term "medium voltage" or "MV" as used herein refers to AC voltages in the range of 1 kilovolt (kV) to 72 kV rms, whereas the term "high voltage" or "HV" refers to AC voltages of more than 72 kV rms. Medium voltage and high voltage are collectively referred to herein as "elevated voltage".

Many separable connectors are T-shaped or elbow-shaped. A separable connector as referred to herein usually has a front cavity to receive a protruding portion of a bushing of a switchgear or a transformer, and an opposed rear cavity facilitating access to a cable lug on elevated voltage inside the separable connector. The cable lug is conductive and is electrically and mechanically connected to the power conductor of the power cable. The cable lug can be connected mechanically and electrically, e.g. by a conductive threaded connection stud, to a conductive element of the bushing, so that power can flow from the power cable through the cable lug, the stud and the bushing into the switchgear or transformer. When the separable connector is in use, the cable lug is on the elevated voltage of the power conductor of the cable.

The rear cavity of a separable connector can receive a matching insulation plug to insulate the connection stud and to fill the space of the rear cavity to reduce the risk of electrical discharges. Such matching pairs of separable connector and insulation plug are commercially available at moderate cost. In many cases, the corresponding shapes of a separable connector and an insulation plug are governed by de-facto standards. Many of such shapes conform to an existing standard for bushings, some form a Type C interface as described in the German standards DIN EN 50180 for bushings and DIN EN 50181 for plug-in type bushings, others conform to ANSI/IEEE standard 386. Often, bodies of insulation plugs are slightly larger than the rear cavity, so that after the insulation plug is urged into the rear cavity with some force, the surfaces of plug and cavity are in an intimate surface contact, which reduces the risk of electrical discharges.

The plug body of an insulation plug according to the present disclosure is shaped for mating with a rear cavity of a separable connector in the same way as the body of a traditional insulation plug. The plug body may be rotationally symmetric about a plug axis. The plug body may, for example, have a frustoconical shape for being inserted into a corresponding frustoconical recess of corresponding shape (the rear cavity) at a rear side of the separable connector, thereby mating the insulation plug with the separable connector.

The plug body has, in axial directions, a low-voltage end portion and an opposed high-voltage end portion. When the plug is in use and inserted, the high-voltage end portion is arranged in the rear cavity of the separable connector, and the low-voltage end portion protrudes from the rear cavity.

The plug body may comprise, or may be formed by, a solidified electrically insulating material, such as an electrically insulating hardened resin.

For electrical and mechanical connection to a bushing, separable connectors comprise a cable lug which is attached, directly or indirectly, to the end of the central conductor of the power cable and protrudes into a space between the front cavity and the rear cavity. The protruding portion of the cable lug usually has an aperture or a thread for attachment to the connection stud which connects the cable lug electrically and mechanically with a conductor of the bushing.

The thread block of an insulation plug according to the present disclosure is affixed in the high-voltage end portion of the plug body. A portion of the thread block may be exposed and externally accessible for facilitating establishing a mechanical connection to a connection stud of the separable connector.

In use, the thread block may be mechanically connected to the cable lug of the separable connector via the plug thread, the tubular sleeve and the connection stud. The mechanical connection between the sleeve and the connection stud may be a direct mechanical connection, i.e. a portion of the sleeve is mechanically connected to the connection stud without any intermediate element. In certain embodiments, for example, the inner sleeve thread is mechanically connected to the connection stud without any intermediate element. Alternatively, in other embodiments, the inner sleeve thread is mechanically connected to the connection stud via one or more intermediate elements.

The thread block may be embedded in the plug body. The thread block may be affixed in the plug body such that rotation of the plug body rotates the thread block with the plug body.

In certain embodiments the thread block is electrically conductive. In certain of these embodiments the thread block is made of, or comprises, a conductive metal. Where the thread block is electrically conductive, it may be on elevated voltage when the insulation plug is in use. A conductive thread block may be adapted to be electrically connected to the cable lug of a separable connector. In such insulation plugs, the thread block may, in use, be on the elevated voltage of the cable lug. An insulation plug according to the present disclosure may then further comprise a voltage sensor for sensing the elevated voltage of the thread block.

In certain alternative embodiments the thread block is electrically insulating. In certain of these embodiments the thread block is made of, or comprises, an electrically insulating material, such as an insulating polymeric material. The electrically insulating material may be identical with the insulating material forming the plug body. An electrically insulating thread block may be formed by a portion of the plug body.

In certain embodiments an insulation plug as described herein further comprises a sensing capacitor, operable as a dividing capacitor in a capacitive voltage-dividing voltage sensor for sensing the elevated voltage of the tubular sleeve. Optionally the sensing capacitor is embedded in the plug body.

A capacitive voltage sensor may comprise a capacitive voltage divider comprising a high-voltage capacitor and a low-voltage capacitor, connected in series between the elevated voltage of the tubular sleeve and electrical ground. A divided voltage may be picked up between the high-voltage capacitor and the low-voltage capacitor. The divided voltage may vary proportionally to the elevated voltage. The elevated voltage is sensed by measuring the divided voltage and multiplying it with a proportionality factor. The sensing capacitor may be the high-voltage capacitor of such a voltage dividing sensor.

The tubular sleeve or - in embodiments in which the thread block is electrically conductive - the thread block may form a first electrode of the sensing capacitor. The second electrode may be formed, for example, by a conductive sheet. The sheet may surround the first electrode. The second electrode may be embedded in the plug body.

An insulation plug according to the present disclosure, further comprising a sensing capacitor can provide the added functionality of voltage sensing in the insulation plug. This may be beneficial in that it allows determining the elevated voltage of the power conductor of the power cable. By replacing a traditional insulation plug with an insulation plug as described herein with a sensing capacitor, a voltage sensor can be easily retrofitted into a network that previously had no sensor, without having to make other changes to the network or its architecture.

In traditional insulation plugs the thread of a connection stud was directly engaged with the plug thread in the thread block. Due to the high mechanical forces involved when inserting and engaging the insulation plug, these threads were often damaged when attempting to engage them with each other. In order to reduce the risk of the insulation plug becoming unusable, the thread block used to be made from a hard metal such as steel. With insulation plugs according to the present disclosure the connection stud does not engage directly with the plug thread, so that the risk of damage to the plug thread is much lower. The plug thread and the thread block can therefore be made of a softer material, such as aluminium, which is also a lighter-weight material. Therefore, generally according to the present disclosure, in certain embodiments the thread block is made of, or comprises, aluminium or brass or copper or a polymeric material.

Making the thread block from a softer, lighter-weight metal like aluminium is now enabled by the present disclosure. The use of aluminium, brass, or a polymeric material may result in a lower weight of the insulation plug, resulting in lower cost for transport and easier installation. A polymeric material may be more cost-effective in manufacturing as it may permit use of molding technology. Generally, a thread block comprising, or made of, a softer material like aluminium, brass, copper or a polymeric material, may be easier to manufacture, e.g. with less hard tools.

The thread block may be made of, or may comprise, an electrically conductive material. It may, for example, be made of, or may comprise, an electrically conductive metal or an electrically conductive polymer. A conductive thread block may be useful in providing electrical stress control within the insulation plug. A conductive thread block may have an outer shape adapted to provide electrical stress control.

Alternatively, in certain embodiments the thread block is made of, or comprises, an electrically insulating material. The thread block may, for example, be made of, or may comprise, an electrically insulating polymer. An insulating thread block may be useful in better insulating the elevated voltage of the connection stud or of the tubular sleeve.

The plug body may be made of a polymeric material. Where the thread block is made of, or comprises, a polymeric material, the polymeric material of the thread block may have a different composition than the polymeric material of the plug body. Alternatively, the polymeric material of the thread block may have the same composition as the polymeric material of the plug body.

The plug thread is an internal thread, i.e. a thread facing radially inwardly. In many traditional insulation plugs a plug thread existed and was designed to engage threadedly with the outer thread of a traditional connection stud directly, without any intermediate elements. To enable this direct threaded engagement, the thread of the connection stud corresponded to the plug thread in size and shape.

In contrast thereto, in insulation plugs according to the present disclosure the plug thread engages with the outer thread of a traditional connection stud indirectly, i.e. via an intermediate element. The intermediate element is the tubular sleeve. The plug thread is engaged with the outer sleeve thread of the tubular sleeve directly. To enable this direct threaded engagement, the outer sleeve thread of the tubular sleeve corresponds to the plug thread in size and shape.

Turning to the tubular sleeve, the length of the sleeve is its extension in axial directions, and radial directions are directions orthogonal to the axial directions. The tubular shape of the sleeve defines a radially outer surface and a radially inner surface. The radially outer surface faces radially outward, the radially inner surface faces radially inward. The sleeve comprises an outer sleeve thread on the radially outer surface and an inner sleeve thread on the radially inner surface. The tubular sleeve may thus also be referred to as a double-threaded sleeve.

The outer sleeve thread is adapted (e.g. by a corresponding size, pitch and shape) for a threaded engagement with the plug thread. The inner sleeve thread is adapted (e.g. by a corresponding size, pitch and shape) for a threaded engagement with the thread of the connection stud.

In certain embodiments the outer sleeve thread and the plug thread are corresponding threads of an M-type thread, as defined in standards ISO 68-1 or ISO 261, as in force on 27 May 2022. In certain of these embodiments the outer sleeve thread and the plug thread have a size of between M20 and M26. Standardized threads of such sizes are cost-effective to manufacture and provide compatibility between tubular sleeves and plug threads that are manufactured independently from each other. Threads of these sizes can transmit appropriate axial forces.

After installation of the separable connector, the connection stud is engaged - via threaded engagement of its outer thread with the inner sleeve thread - with the sleeve, and the sleeve is threadedly engaged - via threaded engagement of its outer thread with the plug thread - with the thread block and the plug body. This way, the plug body is engaged with the connection stud, and by gradually turning the plug body relative to the connection stud the insulation plug can be inserted deeper and deeper into the rear cavity and is thereby brought into a final insertion position.

The outer sleeve thread may have a larger nominal diameter than the inner sleeve thread. The inner sleeve thread may have a nominal diameter of between M10 and M18. The outer sleeve thread may have a nominal diameter of between M20 and M26. The inner sleeve thread and/or the outer sleeve thread may each be a metric thread or an inch-type thread, i.e. a thread measured in inches.

The tubular sleeve may be made from an electrically conductive or from an electrically insulating, i.e. non-conductive, material. In certain embodiments the tubular sleeve is made of, or comprises, a conductive metal. In certain embodiments the tubular sleeve is made of, or comprises, iron or steel or aluminium or copper or brass. Brass, for example, is cost-effective, easy to machine into a tubular sleeve, of an acceptable hardness and requires no coating. Steel is cheap. Aluminium is particularly light-weight. Copper conducts heat and electricity particularly well.

Use of a harder material for the tubular sleeve helps increase the reliability of the insulation plug, because an unsuccessful attempt to threadedly engage the connection stud with the inner sleeve thread will not so easily damage the inner sleeve thread. The risk of damaging the plug thread in a relatively soft thread block when threadedly engaging the outer sleeve thread with the plug thread is low, as this engagement may be performed in the factory under controlled conditions, and may be performed without using much force.

In certain embodiments the tubular sleeve comprises end portions, opposed to each other in a length direction (i.e. an axial direction) of the sleeve. The protruding portion of the inner sleeve thread is comprised in a stud-side end portion of the sleeve, while the opposed end portion is referred to herein as a block-side end portion of the tubular sleeve. The stud-side end portion is adapted to threadedly engage with the connection stud, while the block-side end portion is adapted to threadedly engage with the plug thread.

The outer sleeve thread is operable to engage with the plug thread. The outer sleeve thread is adapted (e.g. by a corresponding size, pitch and shape) for a threaded engagement with the plug thread.

In certain embodiments, the outer sleeve thread extends in axial direction along the full length of the tubular sleeve or along a fraction of the full length of the tubular sleeve, such as along 80%, 50%, or 20% of the full length of the tubular sleeve.

An extension of the outer sleeve thread along the full length of the sleeve helps provide for better transmission of axial forces between the connection stud and the insulation plug, and may facilitate transmission of higher axial forces, permitting the insulation plug to be engaged "tighter" with the connection stud and potentially deeper in the rear cavity. Extension along a fraction of the length may be beneficial in manufacturing of the sleeve, as less of its outer surface needs to be provided with a thread structure, potentially resulting in lower manufacturing cost. In certain embodiments the outer sleeve thread extends, in axial direction, to an outer edge of the block-side end portion of the sleeve.

The radially outer surface of the tubular sleeve may be generally cylindrical. To facilitate installation of the tubular sleeve, the outer surface of the tubular sleeve may comprise two flat portions, radially opposed to each other, for engagement of a wrench. Using a wrench may make it easier for an installer to bring the tubular sleeve into a threaded engagement with the plug thread or with the connection stud.

In certain embodiments the outer sleeve thread is arranged in the block-side end portion of the sleeve. In certain embodiments the outer sleeve thread is arranged in the block-side end portion and extends, in axial direction, to an outer edge of the block-side end portion. This extension to the edge may allow for the sleeve to be shorter in axial directions, because its outer sleeve thread can engage with the plug thread already at its edge. A short sleeve may, in turn, facilitate a short plug thread and a shorter thread block, thus saving weight, space and material.

The outer sleeve thread and the plug thread correspond to each other, e. g. in type, pitch and size, so that they can threadedly engage with each other. In certain embodiments, for example, the outer sleeve thread and the plug thread are corresponding threads of an M22 thread, or of an M20 thread, or of an M24 thread, or of an M26 thread, as defined in standards ISO 68-1 or ISO 261, as in force on 27 May 2022.

The inner sleeve thread is operable to engage with the connection stud. The inner sleeve thread is adapted (e.g. by a corresponding size, pitch and shape) for a threaded engagement with the connection stud. The inner sleeve thread is an inner thread, i.e. a thread facing inwardly. It may form a cylindrical cavity that is open at one end or at both axial ends. After engagement with the connection stud, a portion of the stud may be accommodated in that cylindrical cavity.

In certain embodiments the inner sleeve thread extends in axial direction along the full length of the tubular sleeve or along a fraction of the full length of the tubular sleeve, such as along 80%, 50%, or 20% of the full length of the tubular sleeve.

Extension along the full length may help provide for better transmission of axial forces between the connection stud and the insulation plug, and may facilitate transmission of higher axial forces, permitting the insulation plug to be engaged "tighter" with the connection stud and potentially deeper in the rear cavity. Extension along a fraction of the length may be beneficial in manufacturing of the sleeve, as less of its inner surface needs to be provided with a thread structure, potentially resulting in lower manufacturing cost. In certain embodiments the inner sleeve thread extends, in axial direction, to an outer edge of the stud-side end portion.

In certain embodiments the inner sleeve thread is arranged in the stud-side end portion of the sleeve. In certain embodiments the inner sleeve thread is arranged in the stud-side end portion and extends, in axial direction, to an outer edge of the stud-side end portion. This extension to the edge makes it easier for an installer to achieve an initial threaded engagement between the inner sleeve thread and the connection stud, because the extension to the edge minimizes the distance between stud and thread when the insulation plug is inserted into the rear cavity for engagement with the connection stud.

The inner sleeve thread and the thread of the connection stud correspond to each other, e. g. in type, pitch and size, so that they can threadedly engage with each other. In certain embodiments, for example, the inner sleeve thread and the thread of the connection stud are corresponding threads of an M10 thread, or of an M12 thread, or of an M16 thread, or of an M18 thread, as defined in standards ISO 68-1 or ISO 261, as in force on 27 May 2022, or of an 5/8" thread.

The size and type of the inner sleeve thread ensures mechanical compatibility with the thread of the connection stud, and hence with certain types of separable connectors. On the other hand, the size and type of the outer sleeve thread ensures mechanical compatibility with the plug thread, and hence with certain types of insulation plugs. If the plug thread of a given type of insulation plug is not mechanically compatible with the thread of a given connection stud, stud and plug can thus simply be made compatible with each other via a suitable tubular sleeve which has an outer sleeve thread that is compatible (i.e. threadedly engageable) with the plug thread, and an inner sleeve thread that is compatible with the thread of the connection stud. The tubular sleeve can thereby serve as a kind of adapter and may help reduce the number of types of insulation plugs that need to be produced or kept on stock for compatibility with lesser-common types of connection studs and separable connectors.

Certain connection studs may themselves comprise a double-threaded sleeve (a "stud sleeve") at the end portion that is to threadedly engage with the inner sleeve thread of the tubular sleeve of an insulation plug according to this disclosure. An outer thread of this stud sleeve may then engage with the inner sleeve thread of the tubular sleeve of the insulation plug, while an inner thread of the stud sleeve may be engaged (e.g. threadedly engaged) with the remainder of the connection stud. The presence of the stud sleeve allows for an even greater flexibility in making the threads of the insulation plug fit with the threads of the connection stud. For a given insulation plug a connection stud may be made compatible with the insulation plug shortly before installation, e.g. in the field, by selecting a suitably-sized stud sleeve and engage it with the connection stud just before the connection stud is then threadedly engaged with the tubular sleeve of the insulation plug.

In certain embodiments the outer sleeve thread is a metric thread, and the inner sleeve thread is an inch-type thread. In certain other embodiments the outer sleeve thread is an inch-type thread, and the inner sleeve thread is a metric thread. In preferred embodiments the outer sleeve thread is a metric thread, and the inner sleeve thread is a metric thread. In other preferred embodiments the outer sleeve thread is an inch-type thread, and the inner sleeve thread is an inch-type thread.

According to the present disclosure, a portion of the inner sleeve thread protrudes axially from the plug thread, such that upon insertion the protruding portion can threadedly engage the connection stud. The protruding portion allows initial threaded engagement between connection stud and plug thread at a lower insertion depth of the insulation plug into the rear cavity.

The tubular sleeve is threadedly engaged with the plug thread, via at least an axial portion of the outer sleeve thread, or via the entire outer sleeve thread.

In certain embodiments at least an axial portion of the tubular sleeve protrudes axially from the plug thread. In certain embodiments the stud-side end portion of the sleeve protrudes axially from the plug thread. In certain embodiments the block-side end portion of the sleeve is arranged in the plug thread.

The protruding portion of the inner sleeve thread may protrude axially from the plug thread by a protrusion length of between 1 millimeter (mm) and 50 mm. In certain preferred embodiments the protruding portion of the inner sleeve thread protrudes axially from the plug thread by a protrusion length of between 5 mm and 30 mm. Generally, a protrusion length of at least 1 mm is sufficient to make threaded engagement between connection stud and insulation plug significantly easier. A protrusion length of up to 50 mm can still be accommodated in certain insulation plugs of standard sizes.

The plug thread may not extend, in an axial direction away from the low-voltage end portion of the insulation plug, up to the edge of the thread block. In other words, the insulation plug comprises an axial gap between the plug thread and the edge of the thread block. In other embodiments, the plug thread extends, in an axial direction away from the low-voltage end portion of the insulation plug, up to the edge of the thread block.

The protruding portion of the inner sleeve thread may protrude axially from the edge of the thread block by a length of between 1 millimeter (mm) and 50 mm.

The connection stud is usually firmly engaged with the conductor of the bushing and the cable lug before the insulation plug is inserted into the rear cavity and threadedly engaged with the connection stud.

The connection stud is an elongated, electrically conductive element, generally in the shape of a threaded rod. It often has an axial section of a hexagonal cross section to facilitate turning the connection stud with a wrench so that it can be more easily engaged with a thread of the bushing and so that it can be more easily disengaged from the bushing. For engagement with an inner thread of a bushing conductor, the connection stud comprises an outer thread at a bushing side of the connection stud. For engagement with the plug thread of an insulation plug according to this disclosure, the connection stud comprises an outer thread at a plug side of the connection stud. A central flange may be arranged between the plug side and the bushing side of the connection stud. In use, the flange presses the cable lug against a surface of the bushing conductor when the connection stud is threadedly engaged with, i.e. threaded into, the bushing conductor. To facilitate threading of the connection stud into the bushing conductor thread, the connection stud may comprise a shear-off head at its plug side end. After engagement of the connection stud with the bushing conductor, the shear-off head is sheared off the connection stud, and the plug-side outer thread of the connection stud is available for threadedly engaging with the plug thread.

When the insulation plug is inserted into the rear cavity, but, due to the tubular sleeve protruding from the plug thread, well before the insulation plug is fully inserted into the rear cavity, the inner sleeve thread can engage the thread of the connection stud. By turning the plug body and with it the thread block, the tubular sleeve is turned and engages with the thread of the connection stud. By turning the plug body further, the insulation plug is pulled deeper into the rear cavity 70 towards the cable lug into its final position.

To prevent the tubular sleeve from being threaded deeper into the plug thread instead of engaging the thread of the connection stud in the moment of first engagement, the outer sleeve thread may be provided with a sleeve fixation means, such as a breakable threadlocking adhesive, applied between the outer sleeve thread and the plug thread. In an initial engagement, low torque is applied to the plug body and to the plug thread, so that the sleeve fixation means keeps fixating the tubular sleeve in its position relative to plug thread, and the sleeve will threadedly engage the thread of the connection stud. When more torque is applied to the plug thread, the sleeve fixation means breaks and the tubular sleeve can migrate into the plug thread towards the low-voltage end portion of the insulation plug.

When engaging the connection stud with the inner sleeve thread, it may occur that the sleeve does not engage the end of the connection stud, but instead turns within the plug thread, entering deeper into the plug thread. In order to ensure that upon initial engagement the sleeve engages the end of the connection stud and does not turn within the plug thread, the insulation plug may be provided with sleeve fixation means. In in initial state the sleeve fixation means fixates the tubular sleeve in the plug thread and prevents the sleeve from turning within the plug thread. The inner sleeve thread can thereby be reliably engaged with the thread of the connection stud by turning the plug body. As the plug body is turned further, after its initial engagement, more and more torque is required to turn the insulation plug further. This is because the rear cavity wall must be expanded a bit further with each turn of the insulation plug. When the torque applied to the insulation plug exceeds a threshold torque, the sleeve fixation means breaks, as it is designed, and allows the tubular sleeve to turn within the plug thread. This will facilitate the insulation plug to attain its final position in the rear cavity.

Hence, in certain embodiments the insulation plug further comprises a breakable sleeve fixation means, before breaking preventing the outer sleeve thread from turning relative to the plug thread and after breaking allowing the outer sleeve thread to turn relative to the plug thread.

The sleeve fixation means may help giving the installer more control over the initial threaded engagement between the insulation plug and the connection stud and may make the initial engagement easier, more reliable and hence quicker.

In certain embodiments the breakable sleeve fixation means is arranged between the outer sleeve thread and the plug thread. This arrangement may be beneficial as it prevents rotation of the sleeve in the plug thread particularly effectively and without causing mechanical stress on other elements (outside the threads) of the insulation plug.

It should be noted that the breakable sleeve fixation means may alternatively, or in addition, be arranged in other locations. A central breakable pin, for example, may be arranged centrally in the plug thread to fixate the sleeve via a hexagonal aperture in the sleeve and a corresponding hexagonal cross section of the pin.

In certain embodiments the breakable sleeve fixation means is an adhesive material. The adhesive material may initially be liquid and can be applied, for example, onto the outer sleeve thread shortly before the sleeve is threaded into the plug thread such that a portion of the inner sleeve thread protrudes from the plug thread. The initially liquid adhesive will cure or harden, and then attach the plug thread and the outer sleeve thread to each other, preventing the outer sleeve thread from turning relative to the plug thread. The thin layer of adhesive between the threads can be broken by applying a sufficient amount of torque on the plug thread, while the tubular sleeve is not allowed to turn (e.g. by being engaged with the connection stud). The torque may then break the adhesive material. After breaking the outer sleeve thread can again turn relative to the plug thread.

The adhesive material may be, or may comprise, for example, an acrylic adhesive material, a cyanoacrylate adhesive material, or an epoxy adhesive material. The adhesive material may comprise a curable adhesive, such as a heat curable adhesive. The adhesive material may form a thin layer of adhesive. It may form a thin layer of adhesive between the outer sleeve thread and the plug thread.

The protruding double-threaded tubular sleeve described above facilitates easier engagement of an insulation plug with a plug side end of a connection stud of a separable connector. In a similar fashion, a protruding double-threaded sleeve on the opposite end (the bushing side end) of the connection stud can make engagement of the connection stud to the bushing conductor easier and more reliable.

Before engaging the insulation plug with the connection stud, the connection stud must be engaged with the bushing conductor. It is often difficult to threadedly engage the bushing-side end of the connection stud with a thread, the "bushing thread", in the bushing conductor. This is because an installer needs to push the connection stud through a tight opening in the cable lug and further towards the bushing thread, while pressing the separable connector onto the bushing. With the cable lug in the connector being connected to a stiff, inflexible power cable, the lug opening is often not in a favourable position and orientation for providing an easy path for the connection stud. A longer connection stud would make engagement to the bushing thread easier, but the bushing thread is often not long enough to accommodate any extra length of the stud, so the stud cannot be made longer to ease engagement with the bushing thread.

It can be advantageous to equip the bushing side end portion of the connection stud with a double-threaded tubular sleeve as described above for the insulation plug. With the sleeve protruding, in axial direction, beyond the bushing side end portion of the connection stud, the stud is easier to engage with the bushing thread. When turning the stud further into complete engagement with the bushing thread, the tubular sleeve can migrate - by continuous threading - into the bushing thread so that no extra length of the stud needs to be accommodated in the bushing thread. When the stud is fully engaged with the bushing thread, the sleeve is received with its complete length in the bushing thread. The connection stud is then firmly attached to the bushing thread indirectly via the tubular sleeve. The outer sleeve thread is then threadedly engaged with the bushing thread, while the inner sleeve thread is threadedly engaged with the thread of the connection stud.

An insulation plug according to the present disclosure may be assembled conveniently in any location and/or at any time from a kit of parts delivered to that location. The present disclosure therefore also provides a kit of parts comprising
a) an insulation plug precursor comprising
   i) a plug body for being inserted into a rear cavity of a medium-voltage or high-voltage separable connector for connecting a power cable to a bushing in a power distribution network of a national grid, and operable to insulate a threaded connection stud on medium or high voltage attaching the separable connector to the bushing,
      the plug body being formed by a solidified insulating material and comprising a high-voltage end portion, in use arranged in the rear cavity, and an opposed low-voltage end portion, in use protruding from the rear cavity, and
   ii) a thread block, affixed in the high-voltage end portion of the plug body, and comprising an internal plug thread for securing the insulation plug precursor in the rear cavity via a mechanical connection to the connection stud, and
b) a tubular sleeve comprising
   j) a radially inner surface comprising an inner sleeve thread, the inner sleeve thread being adapted to threadedly engage with the connection stud, and
   jj) a radially outer surface comprising an outer sleeve thread, adapted to be threadedly engaged with the plug thread of the insulation plug precursor, such that a portion of the inner sleeve thread protrudes axially from the plug thread, and such that upon insertion of the insulation plug precursor into the rear cavity the protruding portion can threadedly engage the connection stud.

Installing the tubular sleeve in the plug thread of the insulation plug precursor can result in an insulation plug according to the present disclosure.

Advantageously the parts in the kit of parts can be assembled to form an insulation plug as described herein. Hence, in certain embodiments, in the kit of parts the outer sleeve thread of the tubular sleeve can be threadedly engaged with the plug thread of the insulation plug precursor such as to form an insulation plug as described herein.

The present disclosure may allow a particularly quick and easy assembly or installation of separable connectors by facilitating insertion and securing of the insulation plug in the rear cavity of such a separable connector. The present disclosure therefore also provides a medium-voltage or high-voltage separable connector for connecting a power cable to a bushing in a power distribution network of a national grid, the separable connector comprising a rear cavity, a connection stud for attaching the separable connector to the bushing, and an insulation plug according to the present disclosure, inserted at least partially into the rear cavity, wherein the inner sleeve thread is threadedly engaged with the connection stud.

The present disclosure also provides a power distribution network comprising a medium-voltage or high-voltage power cable and a medium-voltage or high-voltage separable connector as described above, connected to the power cable such that the tubular sleeve is electrically connected to a power conductor of the power cable.

The insulation plug described herein facilitates a more convenient process for securing the insulation plug in a rear cavity of a separable connector and for establishing a mechanical connection of the insulation plug to the connection stud of a separable connector or of a bushing. In particular, the tubular sleeve, engaged with the plug thread, and the protruding portion of its inner sleeve thread make initial threaded engagement with the connection stud easier and more reliable, as described herein.

The present disclosure therefore also provides a process of installing an insulation plug for insulating a threaded connection stud in a rear cavity of a medium-voltage or high voltage separable connector, the process comprising
a) providing an insulation plug as described herein, and a medium-voltage or high voltage separable connector comprising a rear cavity and a threaded connection stud for attaching the separable connector to a bushing,
b) inserting the insulation plug at least partially into the rear cavity,
c) threadedly engaging the inner sleeve thread with a thread of the connection stud.

Embodiments of insulation plugs according to the disclosure will now be described in more detail with reference to the following Figures:
- Fig. 1: Sectional view of a separable connector and a first insulation plug according to the present disclosure,
- Fig. 2: Sectional view of the first insulation plug, and
- Fig. 3: Sectional view of a second tubular sleeve of a second insulation plug according to the present disclosure.

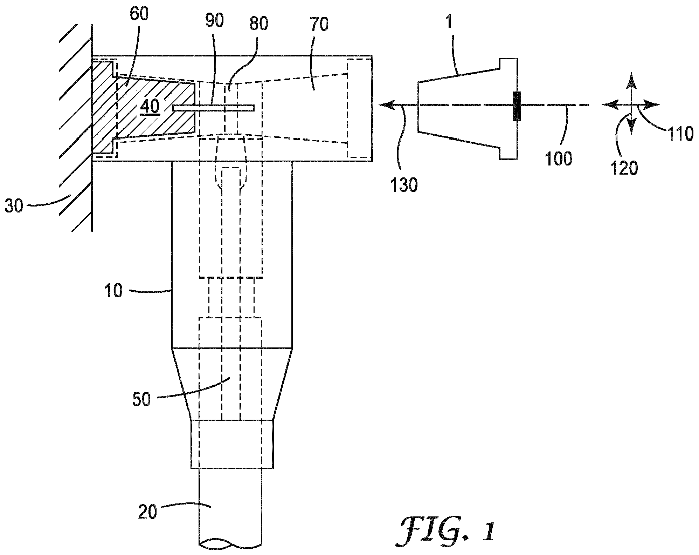

The sectional view of **Figure 1** illustrates a medium-voltage separable connector 10 and generally a first insulation plug 1 according to the present disclosure. The separable connector 10 is arranged at an end of a medium-voltage power cable 20 and connects, via a bushing 40, the power-carrying central conductor 50 of the cable 20 to a medium-voltage switchgear 30 in a power distribution network of a national grid.

The separable connector 10 is a T-shaped separable connector 10 and comprises a front cavity 60 for receiving the bushing 40, and a rear cavity 70 for receiving an insulation plug 1 of a matching shape according to the present disclosure, shown in Figure 1 to the right of the rear cavity 70, before being inserted into the rear cavity 70. The insulation plug 1 according to the present disclosure serves to electrically insulate a cable lug 80 of the separable connector 10, which is electrically connected to the central conductor 50 of the cable 20 and can be electrically and mechanically connected to a conductive component of the bushing 40 via an electrically conductive, threaded connection stud 90. In use, the cable lug 80 is on the elevated voltage of the central conductor 50 of the cable.

The first insulation plug 1 has an overall frustoconical outer shape, generally rotationally symmetric about a plug axis 100 which defines axial directions 110 and radial directions 120, which are directions orthogonal to the axial directions 110. The insulation plug 1 can be inserted into the rear cavity 70 by moving it axially in an axial insertion direction 130 into the rear cavity 70 where it is turned by several revolutions about the plug axis 100 so that it threadedly engages with the connection stud 90 on elevated voltage. The geometry of the insulation plug 1 is adapted to conform to IEEE standard 386 to be suitable for a greater number of separable connectors. Depending on where the insulation plug 1 is to be used, it could alternatively be adapted to conform to other standards or be adapted to fit into the most common types of separable connectors in a specific area of the world.

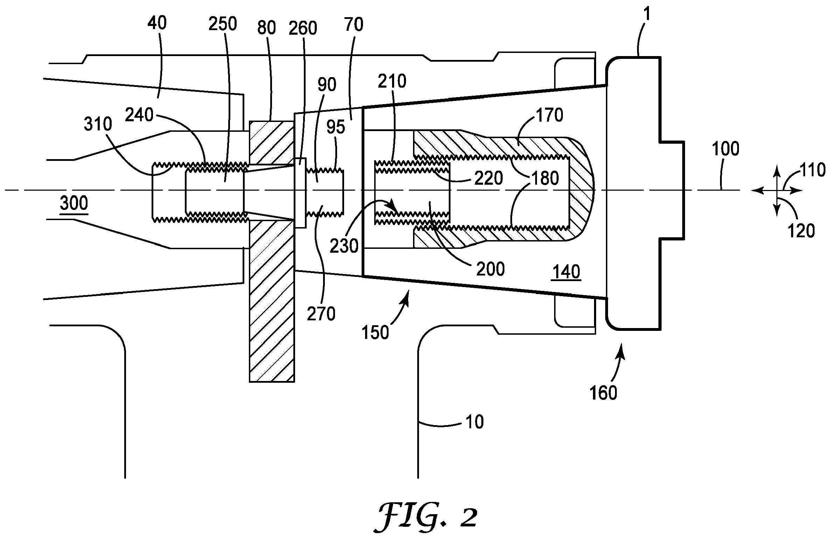

**Figure 2** is a cross section of the first insulating plug 1 according to the present disclosure, as being incompletely inserted into the rear cavity 70 of the separable connector 10, a short distance from its final insertion depth. The insulation plug 1, once fully inserted, insulates electrically the threaded connection stud 90.

The insulation plug 1 includes a plug body 140 formed by a solidified insulating material. Its high-voltage end portion 150 is arranged deep in the rear cavity 70, once the insulation plug 1 is fully inserted, and its opposed low-voltage end portion 160 protrudes from the rear cavity 70 even when the insulation plug 1 is fully inserted.

For securing the insulation plug 1 in the rear cavity 70, a thread block 170 of aluminium is affixed in the high-voltage end portion 150 of the insulation plug 1, which comprises an internal plug thread 180. A symmetry axis of the plug thread 180 defines axial directions 110 and radial directions 120 orthogonal to the axial directions 110.

A tubular sleeve 200 protrudes in an axial direction 110 from the plug thread 180. The sleeve 200 is made from steel and has an outer sleeve thread 210 in its radially outer surface, and an inner sleeve thread 220 in its radially inner surface. The inner sleeve thread 220 is adapted in size, pitch and type to threadedly engage with the thread 95 of the connection stud 90. A rear axial portion of the outer sleeve thread 210 is threadedly engaged with the plug thread 180, while a protruding portion 230 of the inner sleeve thread 220 protrudes from the plug thread 180.

The connection stud 90 extends axially through the cable lug 80. A second thread 240 on the bushing side 250 of the stud 90 is threaded firmly into a corresponding bushing thread 310 in the bushing conductor 300, so that a central flange 260, arranged between the plug side 270 and the bushing side 250 of the connection stud 90, is pressed firmly against the cable lug 80, thereby fixing the lug 80 to the bushing 40.

In the tubular sleeve 200 of the first insulation plug 1 of Figure 2 the outer sleeve thread 210 extends in axial directions 110 along the full length of the sleeve 200. This may not be necessary for the insulation plug 1 to be easy to engage with the connection stud 90, so that in alternative embodiments the outer sleeve thread 210 may be shorter. Similarly, in the tubular sleeve 200 of the first insulation plug 1 of Figure 2 the inner sleeve thread 220 extends in axial directions 110 along the full length of the sleeve 200. This may also not be necessary for the insulation plug 1 to be easy to engage with the connection stud 90, so that in alternative embodiments the inner sleeve thread 220 may be shorter as well.

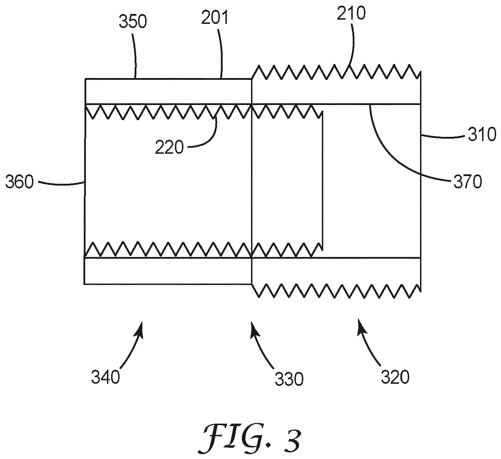

The sectional view of **Figure 3** illustrates an alternative, second tubular sleeve 201 for a second insulation plug (not shown), in most aspects similar to the first tubular sleeve 200 of the first insulation plug 1. The second tubular sleeve 201 is a single unitary piece, as is the first tubular sleeve 200 of the first insulation plug 1 of Figure 2. In this second tubular sleeve 201, the outer sleeve thread 210 on the radially outer surface of the sleeve 201 extends in axial directions 110 from an edge 310 of a plug-side end portion 320 of the sleeve 201 to a middle portion 330 of the sleeve 201. A bushing-side end portion 340 of the sleeve 201 has a smooth outer surface 350 and no thread on its outer surface 350 in the bushing-side end portion 340. Via its outer sleeve thread 210 the second tubular sleeve 201 can be threadedly engaged with the plug thread 180 in the plug body 140, similar to how the first tubular sleeve 200 can be threadedly engaged with the plug thread 180 of the first insulation plug 1 of Figures 1 and 2. It should be noted that the outer sleeve thread 210 may not extend to the edge 310 of the plug-side end portion 320, but may be shorter in axial direction 110.

In the second tubular sleeve 201 of Figure 3 the inner sleeve thread 220 on the radially inner surface of the sleeve 201 extends in axial directions 110 from an edge 360 of the bushing-side end portion 340 of the sleeve 201 to a middle portion 330 of the sleeve 201. The plug-side end portion 320 of the sleeve 201 has a smooth inner surface 370 and no thread on its inner surface 370 in the plug-side end portion 320. Via its inner sleeve thread 220 the second tubular sleeve 201 can be threadedly engaged with the connection stud 90, similar to how the first tubular sleeve 200 can be threadedly engaged with the connection stud 90, as illustrated in Figures 1 and 2. It should be noted that the inner sleeve thread 220 may not extend to the edge 360 of the bushing-side end portion 340 of the sleeve 201, but may be shorter in axial direction 110.

## Claims

1. Insulation plug (1)
for being inserted into a rear cavity (70) of a medium-voltage or high-voltage separable connector (10) for connecting a power cable (20) to a bushing (40) in a power distribution network of a national grid,
and operable to insulate a threaded connection stud (90) on medium or high voltage for attaching the separable connector (10) to the bushing (40),
the insulation plug (1) comprising
a) a plug body (140) formed by a solidified insulating material and comprising a high-voltage end portion (150), in use arranged in the rear cavity (70), and an opposed low-voltage end portion (160), in use protruding from the rear cavity (70);
b) a thread block (170), affixed in the high-voltage end portion (150) of the plug body (140), and comprising an internal plug thread (180) for securing the insulation plug (1) in the rear cavity (70) via a mechanical connection to the connection stud (90), wherein a symmetry axis (100) of the plug thread (180) defines axial directions (110);
c) a tubular sleeve (200, 201) comprising
i) a radially outer surface (350) comprising an outer sleeve thread (210);
ii) a radially inner surface (370) comprising an inner sleeve thread (220); the inner sleeve thread (220) being adapted to threadedly engage with the connection stud (90);
wherein at least an axial portion of the outer sleeve thread (210) is threadedly engaged with the plug thread (180), and
wherein a portion (230) of the inner sleeve thread (220) protrudes axially from the plug thread (180), such that upon insertion the protruding portion (230) can threadedly engage the connection stud (90).

2. Insulation plug (1) according to claim 1, wherein the thread block (170) is made of, or comprises, aluminium or brass or copper or a polymeric material.

3. Insulation plug (1) according to claim 1 or claim 2, wherein the tubular sleeve (200, 201) is made of, or comprises, iron or steel or aluminium or copper or brass.

4. Insulation plug (1) according to any one of the preceding claims, wherein the outer sleeve thread (210) and the plug thread (180) are corresponding threads of an M-type thread, as defined in standards ISO 68-1 or ISO 261, as in force on 27 May 2022, and wherein the outer sleeve thread (210) and the plug thread (180) have a size of between M20 and M26.

5. Insulation plug (1) according to any one of the preceding claims, wherein the inner sleeve thread (220) extends in axial direction (110) along the full length of the tubular sleeve (200) or along a fraction of the full length of the tubular sleeve (201), such as along 80%, 50%, or 20% of the full length of the tubular sleeve (201).

6. Insulation plug (1) according to any one of the preceding claims, wherein the outer sleeve thread (210) extends in axial direction (110) along the full length of the tubular sleeve (200) or along a fraction of the full length of the tubular sleeve (201), such as along 80%, 50%, or 20% of the full length of the tubular sleeve (201).

7. Insulation plug (1) according to any one of the preceding claims, further comprising a breakable sleeve fixation means, before breaking preventing the outer sleeve thread (210) from turning relative to the plug thread (180) and after breaking allowing the outer sleeve thread (210) to turn relative to the plug thread (180).

8. Insulation plug (1) according to claim 7, wherein the breakable sleeve fixation means is arranged between the outer sleeve thread (210) and the plug thread (180).

9. Insulation plug (1) according to claim 7 or claim 8, wherein the breakable sleeve fixation means is an adhesive material.

10. Insulation plug (1) according to any one of the preceding claims, further comprising a sensing capacitor, operable as a dividing capacitor in a capacitive voltage-dividing voltage sensor for sensing the elevated voltage of the tubular sleeve (200, 201), wherein optionally the sensing capacitor is embedded in the plug body (140).

11. Kit of parts comprising
a) an insulation plug precursor comprising
i) a plug body (140) for being inserted into a rear cavity (70) of a medium-voltage or high-voltage separable connector (10) for connecting a power cable (20) to a bushing (40) in a power distribution network of a national grid, and operable to insulate a threaded connection stud (90) on medium or high voltage attaching the separable connector (10) to the bushing (40),
the plug body (140) being formed by a solidified insulating material and comprising a high-voltage end portion (150), in use arranged in the rear cavity (70), and an opposed low-voltage end portion (160), in use protruding from the rear cavity (70), and
ii) a thread block (170), affixed in the high-voltage end portion (150) of the plug body (140), and comprising an internal plug thread (180) for securing the insulation plug precursor in the rear cavity (70) via a mechanical connection to the connection stud (90), and
b) a tubular sleeve (200, 201) comprising
j) a radially inner surface (370) comprising an inner sleeve thread (220), the inner sleeve thread (220) being adapted to threadedly engage with the connection stud (90), and
jj) a radially outer surface (350) comprising an outer sleeve thread (210), adapted to be threadedly engaged with the plug thread (180) of the insulation plug precursor, such that a portion (230) of the inner sleeve thread (220) protrudes axially from the plug thread (180), and such that upon insertion of the insulation plug precursor into the rear cavity (70) the protruding portion (230) can threadedly engage the connection stud (90).

12. Kit of parts according to claim 11, wherein the outer sleeve thread (210) of the tubular sleeve (200, 201) can be threadedly engaged with the plug thread (180) of the insulation plug precursor such as to form an insulation plug (1) according to any one of claims 1 to 10.

13. Medium-voltage or high-voltage separable connector (10) for connecting a power cable (20) to a bushing (40) in a power distribution network of a national grid, the separable connector (10) comprising a rear cavity (70), a connection stud (90) for attaching the separable connector (10) to the bushing (40), and an insulation plug (1) according to any one of claims 1 to 10, inserted at least partially into the rear cavity (70), wherein the inner sleeve thread (220) is threadedly engaged with the connection stud (90).

14. Power distribution network comprising a medium-voltage or high-voltage power cable (20) and a medium-voltage or high-voltage separable connector (10) according to claim 13, connected to the power cable (20) such that the tubular sleeve (200, 201) is electrically connected to a power conductor (50) of the power cable (20).

15. Process of installing an insulation plug (1) for insulating a threaded connection stud (90) in a rear cavity (70) of a medium-voltage or high voltage separable connector (10), the process comprising
a) providing an insulation plug (1) according to any one of claims 1 to 10 and a medium-voltage or high voltage separable connector (10) comprising a rear cavity (70) and a threaded connection stud (90) for attaching the separable connector (10) to a bushing (40),
b) inserting the insulation plug (1) at least partially into the rear cavity (70),
c) threadedly engaging the inner sleeve thread (220) with a thread of the connection stud (90).
